# EUROPEAN PATENT APPLICATION

(11) **EP 0 888 024 A1**
(43) Date of publication of application: **30.12.1998**
(21) Application number: 97304472.0
(22) Date of filing: 25.06.1997
(51) Int. Cl.: H04Q 7/38, H04B 7/185

(54) **Call setup in a mobile communication system**

(71) Applicant: ICO Services Ltd., Hammersmith, London W6 9BN (GB)
(72) Inventor: Mullins, Dennis, London SE11 5UL (GB)
(74) Representative: Geary, Stuart Lloyd

(57) **Abstract**

A call setup signal, sent from a base station to a mobile station, in a two-way radio communication system has a greater link margin than speech signals over the same path. Consequently, the user of a mobile station can be alerted to another party's wish to communicate even when the path between the base and mobile stations is too poor to support speech communication. However, the user can respond to the alert by taking some action to improve the path, for example extending an antenna or moving to a new location.

A first embodiment comprises a low-power mobile radio system and a second embodiment is incorporated in a satellite mobile telephone system.

## Description

The present invention relates to a method of establishing communication in a mobile radio system comprising transmitting a call setup signal to a mobile station in a control channel and transmitting a user generated signal to or from the mobile station in a traffic channel and to a mobile radio system comprising a mobile station and a base station configured to send a call setup signal in a control channel and exchange user-generated signals in a traffic channel. The present invention also relates to a mobile radio apparatus comprising transceiver means, alert signal generating means and a controller and to a radio base station apparatus comprising control means for generating a call setup signal, input means for receiving a user-generated signal and transmitter means for transmitting the call setup signal and a subsequently received user-generated signal from the input means. The present invention further relates to radio spectrum comprising a carrier wave modulated with setup data for a mobile station and subsequently a carrier wave modulated with speech for said mobile station, the signals comprised in the spectrum being radiated from the same location.

The present invention addresses a problem arising from the availability of limited transmitter power. The limitation on transmitter power may be a regulatory contraint, such as imposed by the UK Short Range Radio Devices regulations, or technical as in the case of a satellite mobile telephone system where power is provided in the satellite by solar panels and in mobile stations by batteries.

At VHF frequencies and above, radio signals are prone to attenuation due to Structures and multipath fading. Furthermore, mobile radios often have retractable antennas and, as would be expected, these antennas are much less effective when retracted. It is often the case that the user of a mobile radio need only move a matter of a few metres to a few tens of metres to make the difference between the impossibility and the possibility of communication. At an extreme, the user need only extend the antenna to make communication possible.

It is an aim of the present invention to overcome this problem.

Accordingly, the present invention provides for the notification to a mobile station that another party wishes to communicate in such a way that the mobile station user can take the steps necessary, e.g. move or extend an antenna, to make communication possible. The notification may comprise setting the mobile station in a state for two-way communication and will hereinafter be referred to as "call setup". The term "user-generated signal" is used hereinafter to identify signals conveying the information that the user wishes to communicate, be it speech or data.

A method according to the present invention is characterised in that the call setup signal and the user-generated signal and/or the processing thereof by the mobile station is configured for providing a greater link margin for the control channel than that for the traffic channel.

It should be borne in mind that, while the signals are configured for providing a particular link margin relationship, this relationship need not always hold true in a given system if, for example, transmission power is dynamically varied so that the quality of the traffic channel is always just acceptable to minimize power consumption. Accordingly, a method according to the present invention may be merely one operational option among many provided in a system.

Preferably, the setup signal is characterised in that it is used in the automatic placing of the mobile station in a condition for the transmission of user-generated signals.

Preferably, a method according to the present invention comprises monitoring at the mobile station a path quality for a control channel and enabling use of the traffic channel when the monitored path quality is adequate to support the traffic channel. The control channel may be that used for the setup signal or a control channel for some other purpose. In any event, the monitored channel must be usable to predict the quality of the traffic channel. Alternatively, the mobile station could send standard signals to the base station and the base station could determine path quality from these signals.

A method according to the present invention is useful in systems employing a satellite, in which case the path, whose quality is monitored, will be that from the satellite to the mobile station.

In the GSM (Global System for Mobile Communication), a mobile terminated call is established by the following procedure. A paging signal is broadcast in cells where the mobile station is likely to be using a PAGCH (Paging and Access Grant Channel). The mobile station responds by sending a channel request in a RACH (Random Access Channel). The channel request is passed through to the base station controller and a SDCCH (Slow Dedicated Control CHannel) allocation is returned and transmitted to the mobile station in the PAGCH. The SDCCH is used for subsequent set up exchanges.

Once the SDCCH has been allocated by the base station controller, the visited mobile switching centre issues a Setup message to the mobile station which is sent in the allocated SDCCH. If the mobile station can accept the call, it replies in the SDCCH with a call confirmed message. The mobile station then alerts the user by producing an audio signal and sends an Alerting message to the visited mobile switching centre using the SDCCH. An address complete message is sent by the visited mobile switching centre to the network of the calling party either on receipt of the call confirmed message or the alerting message. This enables the calling party's network to generate a ringing signal in the call in party's earphone.

The user responds to the audio signal by lifting the handset of the mobile station or pressing a button. This action causes the mobile station to send a Connect message to the visited mobile switching centre using the SDCCH. The visited mobile switching centre then instructs the base station controller to allocate a TCH (Traffic CHannel) to the mobile station. The mobile station is notified of the allocated TCH using the SDCCH. The mobile station confirms to the visited mobile switching centre that the allocation of TCH using the allocated SDCCH and the visited mobile switching centre sends an answer message to the calling party's network so that the speech connection can be established. At this time, the SDCCH is deallocated and a connect acknowledgement is sent back to the mobile station.

There after the user and the calling party can converse using the allocated TCH.

In GSM systems, a 30dB link margin is provided for the PAGCH, the SDCCH and the TCH.

For further information on GSM, the reader is directed to "The SMG System for Mobile Communications" by Michel Monly and Marie-Bernadette Pautet (ISBN 2-9507190-0-7).

It has been proposed to provide mobile telephone services using satellites. Known satellite mobile telephone systems include the Inmarsat-M system, the IRIDIUM™ system described in, for example EP-A-0365885, the ICO™ system described in, for example, GB-A-2295296 and the ODYSSEY™ system described in, for example, EP-A-0510789. Whilst each of these systems is cellular in nature, they differ from terrestrial systems in that the cells move relative to the earth's surface because each cell is defined by a beam from an orbitting satellite.

A minimum requirement for a usable satellite mobile telephone system is that a user be able to conduct a telephone call in a location providing an unblocked, line-of-sight path to the satellite. The signal characteristics providing this level of service may be defined as providing a 0dB link margin. Of course, it is desirable that a call can be conducted under less favourable conditions. Therefore, in practice, it is preferred that the signal from the satellite to the mobile station be arranged to provide a larger link margin, for example 8dB. The choice of this value is an engineering compromise and requires the balancing of various factors, including acceptable service levels, power availability and data rate.

During a telephone call, the user will have the mobile station's antenna extended and in the open. However, the user will need to be alerted to incoming calls when the mobile station is, for instance, in a pocket with its antenna retracted. Accordingly, control signalling to alert a user to an incoming call and perform call setup is desirably carried out with a larger link margin, for example 18dB. This difference in link margin produces a further problem. It may be that the mobile station will respond to a paging signal and start ringing but, when the user answers the call, he may find that the link quality is too poor for speech communication because he is in a poor location such as in a building away from a window facing the satellite.

When applied to a satellite mobile telephone system, a method according to the present invention preferably comprises the steps of allocating the control channel to the mobile station, generating at the mobile station a first perceptible alerting signal until use of the traffic channel is enabled and thereafter generating at the mobile station a second perceptible alerting signal, the first and second perceptible alerting signals differing from each other. Such an arrangement avoids a user answering a call before it has been fully set up and being presented with an apparently silent "line". However, this feature is not essential as a user may be warned in an instruction manual of this silent line effect or the mobile station may be adapted to play a stored message or tune between receiving an off-hook command from the user and the call setup being completed.

One method of operating a satellite mobile telephone system according to the present invention comprises the steps of:
paging the mobile station to notify it of an incoming call;
operating the mobile station to request a control channel in response to the paging;
notifying the mobile station of a control channel allocated to it;
operating the mobile station to monitor the path quality for the control channel;
if the monitored quality of the control channel is sufficient to support a call, operating the mobile station to detect an off-hook command; and
on detection of an off-hook command, operating the mobile station to send a call answered message to a switching centre and allocating the traffic channel to the call.

Another method of operating a satellite mobile telephone system according to the present invention comprises the steps of:
paging the mobile station to notify it of an incoming call;
operating the mobile station to request the control channel in response to the paging;
notifying the mobile station of the control channel allocated to it;
operating the mobile station to monitor path quality for the control channel and
repeatedly report the path quality to a network control node; and
when the reported path quality is sufficient to support a traffic channel, allocating a traffic channel to the call at the network control node.

A mobile radio system according to the present invention is characterised in that the base station and/or the mobile station is configured such that the link margin for the control channel is greater than that for the traffic channel. The link margin may be set by the nature of the signals transmitted and/or the processing thereof that is carried out at the mobile station.

A mobile radio apparatus according to the present invention is characterised in that the controller is configured to respond to a call setup signal by monitoring the path quality for a channel from the same transmitter as the setup signal until the monitored path quality is sufficient to support user generated signal transmission and then becoming enabled for transmission of user generated signals. Preferably, it is a control channel that is monitored and may be that which bore the call setup signal.

Preferably, the apparatus includes an alert signal generator, wherein the controller is configured to further respond to a call setup signal to operate the alert signal generator to notify a user that another party wishes to communicate but that communication is not currently possible during the time elapsing until the monitored path quality is sufficient to support user generated signal transmission. The same or another alert signal generator may be to notify a user that the user generated signal transmission is possible. This notification may simply comprise allowing receiver noise to be output to a loudspeaker.

A radio base station according to the present invention is characterised in that the transmitter means is configured to transmit the call setup signal and the user-generated signals in a manner to provide for the call setup signal a greater link margin than for the user-generated signal.

A radio spectrum according to the present invention is characterised in that the setup data is at a first information rate and the speech is at a second higher information rate.

BPSK may be used for the setup data and QPSK used for the speech.

Preferably, a TDMA channelisation scheme is used.

Embodiments of the present invention will now be described, by way of example, with reference to the accompanying drawings, in which:
Figure 1 is a block diagram of a base station;
Figure 2 is a block diagram of a mobile station;
Figure 3 is a schematic diagram of the physical components of a satellite mobile telephone system;
Figure 4 shows a mobile telephone partially cut away;
Figure 5 is a schematic diagram of a satellite access node as shown in Figure 1; Figure 6 is a timing chart illustrating a method according to the present invention;
Figure 7 is a timing chart illustrating another method according to the present invention; and
Figure 8 is a timing chart illustrating a further method according to the present invention.

A simple system illustrating the principles of the present invention will first be described. Thereafter, examples of the application of the present invention to a sophisticated satellite mobile telephone system will be described.

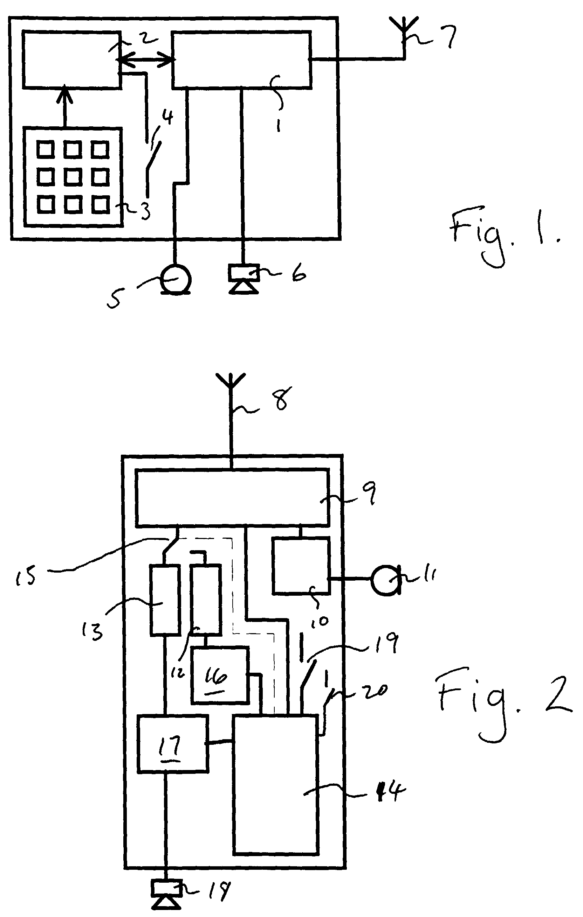

Referring to Figure 1, a base station comprises radio transceiver circuitry 1, a control circuit 2 which may comprise a microprocessor, a numerical keypad 3, a transmit switch 4, a microphone 5, a loudspeaker 6 and an antenna 7. The transceiver circuitry 1 includes an am modulator, an am demodulator, audio amplifiers, an rf power amplifier, a front end circuit, an if circuit and a switchable crystal controlled oscillator.

The microphone 5 is coupled to the transceiver circuitry 1 for supplying modulating signals to the am modulator. The loudspeaker 6 is coupled to the transceiver circuitry 1 for receiving audio signals from the am demodulator. The control circuit 2 is coupled to the transceiver circuitry 1 for controlling the switching of the oscillator and transmit/receive switching. The keypad 3 is arranged to provide digital codes as inputs to the control circuit 2. The transmit switch 4 is also coupled to the control circuit 2 so that the control circuit 2 can place the transceiver circuitry 1 in its transmit configuration. The antenna 7 is coupled to the front end and rf amplifier via a switching circuit.

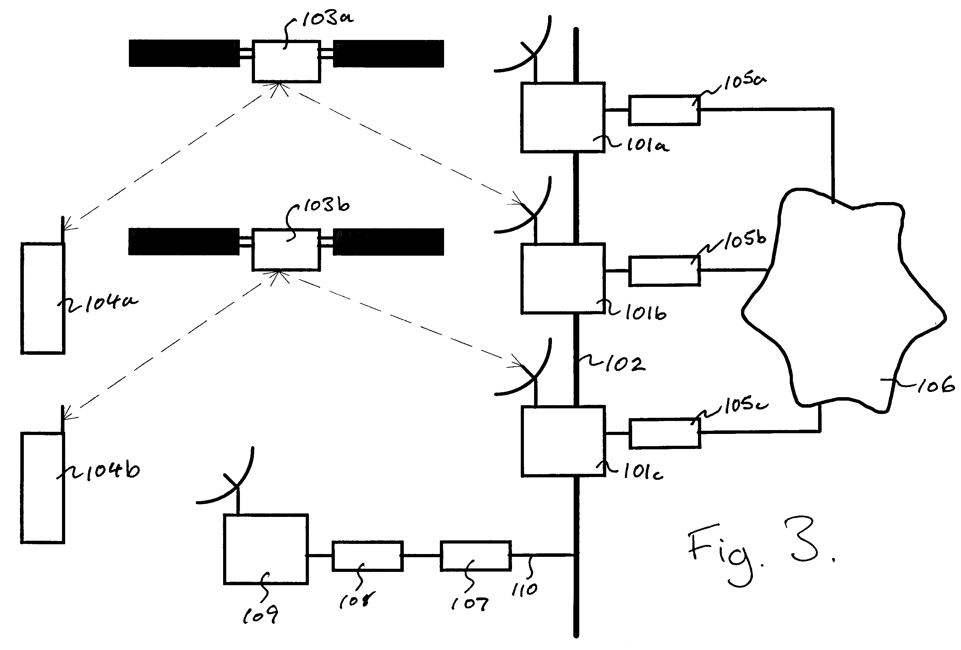

Referring to Figure 2, a mobile station comprises an antenna 8, rf circuitry 9, an input audio amplifier 10 coupled to a microphone 11, a 100Hz BW crystal filter 12, a 6kHz BW crystal filter 13, a control circuit 14 which may comprise a microprocessor, a switching circuit 15 for selectively applying an if output signal from the rf circuitry 9 to the filters 12,13, a first demodulator and amplifier circuit 16, a second demodulator and amplifier circuit 17, a loudspeaker 18 coupled to the output of the second demodulator and amplifier circuit 17, and a transmit switch 19. The rf circuitry 9 includes a front end circuit, an rf power amplifier, a switchable crystal oscillator, an am modulator and a mixer for converting a received rf signal into an if signal for output to the filters 12,13. The switching of the crystal oscillator and switching between transmit and receive is controlled by the control circuit 14. The control circuit 14 is connected to the transmit switch 19 and the output of the first demodulator and amplifier circuit 16. The control circuit 14 also has an output coupled to an input to the second demodulator and amplifier circuit 17 so that it can send audio signals to the loudspeaker 18.

Further constructional details of the base station of Figure 1 and the mobile station of Figure 2 will become apparent from the following description of their operation.

When an operator of the base station wishes to contact a user of a mobile station, the base station operator presses a key on the keypad 3 that identifies the mobile station. The control circuit 2 detects that a key has been pressed and outputs control signals to the transceiver circuitry 1. These control signals first cause the crystal oscillator to be switched for producing a carrier wave at 49.83MHz. Then the control circuit 2 causes the transceiver circuitry 1 to on/off key the carrier wave according to a code corresponding to the key pressed by the base station user. This code may simply be the ASCII code for the number of the key pressed. However, the code is preferably one in which each number is represented by different temporal arrangements of, for example, three '1's, e.g. 1 1100001, 2 = 1010001 .... . The code is transmitted at a rate of 2 bits s⁻¹. The code is transmitted with an effective radiated power (ERP) of 10mW.

Once the code has been transmitted, the control circuit 2 of the base station returns the transceiver circuitry 1 to its receiving mode, with the oscillator switched to tune the transceiver circuitry 1 to 49.86MHz. The transceiver circuitry 1 remains in receive mode for 3 seconds unless the operator presses another key on the keypad 3 or operates the transmit switch 4. The "transmit code then receive for 3 seconds" cycle is repeated until the operator presses another key on the keypad 3 or operates the transmit switch 4. If the base station operator hears the mobile station user reply during one of these 3 second gaps, he operates the transmit switch 4 to place the base station in a condition for normal simplex speech communication.

In its idle mode, the mobile station is tuned to 49.83MHz and the if output of the rf circuit 9 is applied to the 100Hz BW filter 12 by the switching circuit 15. The control circuit 14 constantly monitors the output of the first demodulator and amplifier circuit 16. If a code signal from the base station is received, the control circuit 14 compares the received code with the mobile station's code. If the mobile station's code is received twice, separated by 3 seconds, the control circuit 14 determines that the mobile station is being called and outputs a signal to the second demodulator and amplifier circuit 1750 that a "beep" is produced by the loudspeaker 18.

If the amplitude of the pulses of the received code, output by the first demodulator and amplifier circuit 16, is determined by the control circuit 14 to be greater than a predetermined threshold, the control circuit 14 retunes the rf circuitry 9 to 49.86MHz and operates the switching circuit 15 to apply the if output of the rf circuitry 9 to the 6kHz BW filter 13. This causes noise to be output by the loudspeaker 18, alerting the user to the fact that he is required to call the base station. The user calls the base Station, by operating the transmit switch 19 and talking into the microphone 11 in the normal manner. Once the user has finished talking with the base station operator, he must operate a standby switch 20 to return the mobile station to its idle mode.

Both the base station and the mobile station transmit speech signals as 100% modulated am with an ERP of 10mW.

If the amplitude of the code pulses, output by the first demodulator and amplifier circuit 16, is not greater than the predetermined threshold, the control circuit 14 causes a "beep" to be generated each time the mobile station's code is received until the threshold is passed, in which case the mobile station is retuned as described above. The continued beeping alerts the user to the fact that the base station operator wishes to speak with him but that he must move to a position where the signal path from the base station is better.

The combination of low data rate and narrow if filter at the mobile station means that the signal-to-noise ratio of the code signal is much greater than for the speech signals. Accordingly, the mobile station user can be informed that the base station operator wishes to make contact even though the path between the stations is too poor to support am speech communication. Once the mobile station user is made aware of the base station operator's desire to communicate, the mobile station user can move to a new location providing a better path from the base station, for example moving to a position providing a line of sight path to the base station.

It will be appreciated that the signalling signal must be configured so as to be able to be received with a higher signal to noise ratio than the speech signal. This may be achieved by using low source data rates so that the signal has a low bandwidth or can include error correction coding. Alternatively, the data can be repeated. In this case, the mobile station can extract the signal from the noise because the signal repetitions will combine additatively whereas the noise will combine according to its root mean square. It is also known to extract pulse signals from A1A signals, having a poor signal to noise ratio, by applying the received signal to a phase-locked loop and monitoring the lock condition of the phase-locked loop. The bandwidth of the receiver is then set by the capture range of the phase-locked loop.

From the foregoing, the principles underlying the present invention will now be apparent. Therefore, the advantageous application of these principles to a sophisticated satellite mobile telephone system will now be described.

An overview of a satellite mobile telephone system will be given first.

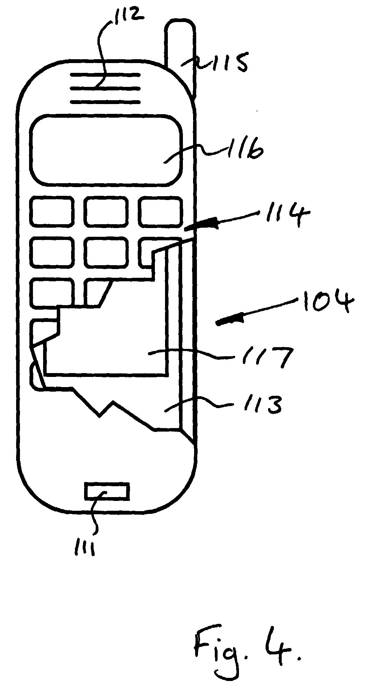

Referring to Figure 3, a satellite mobile telephone system comprises a plurality of satellite access nodes (SAN) 101a, 101b, 101c interconnected by a high capacity digital network 102 (hereinafter "the backbone network"), a plurality of satellites 103a, 103b, a plurality of a mobile stations (UT) 104a, 104b, gateways 105a, 105b, 105c providing connections between the SANs 101a, 101b, 101c and other networks 106, a network management centre (NMC) 107, a satellite control centre (SCC) 108 and a tracking, telemetry and control station (TT&C) 109. The NMC 107, the SCC 108 and the TT&C 109 are interconnected by a lower capacity digital network 110 which is also connected to the backbone network 102. The other networks 6 comprise the public switched telephone network (PSTN), cellular telephone networks and the like.

The SCC 108 and the TT&C 109 control the operation of the satellites 103a, 103b, for instance setting transmit power levels and transponder input tuning, as directed by the NMC 107. Telemetry signals from the satellites 103a, 103b are received by the TT&C 109 and processed by the SCC 108 to ensure that the satellites 103a, 103b are functioning correctly.

During a telephone call, a UT 104a, 104b communicates with a satellite 103a, 103b via a full duplex channel comprising a downlink channel and an uplink channel. The channels comprise TDMA time slots on a frequencies allocated on initiation of the call.

The satellites 103a, 103b are in non-geostationary orbits and comprise generally conventional satellites, such as the known Hughes HS601 model, and may include features as disclosed in GB-A-2288913. Each satellite 103a, 103b is arranged to generate an array of beams covering a footprint beneath the satellite, each beam including a number of different frequency channels and time slots.

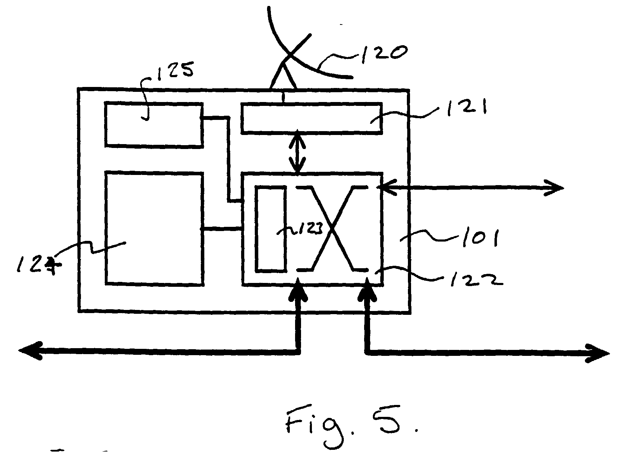

Referring to Figure 4, a UT 104 is generally similar to the units presently available for GSM networks and comprises a codec, a controller, a microphone 111, a loudspeaker 112, a battery 113, a keypad 114, a radio frequency interface, an antenna 115, a display 116 and subscriber identification module (SIM) smart card 117.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM 117 includes a processor and a non-volatile memory which stores data identifying the subscriber and data for use in encrypted communication.

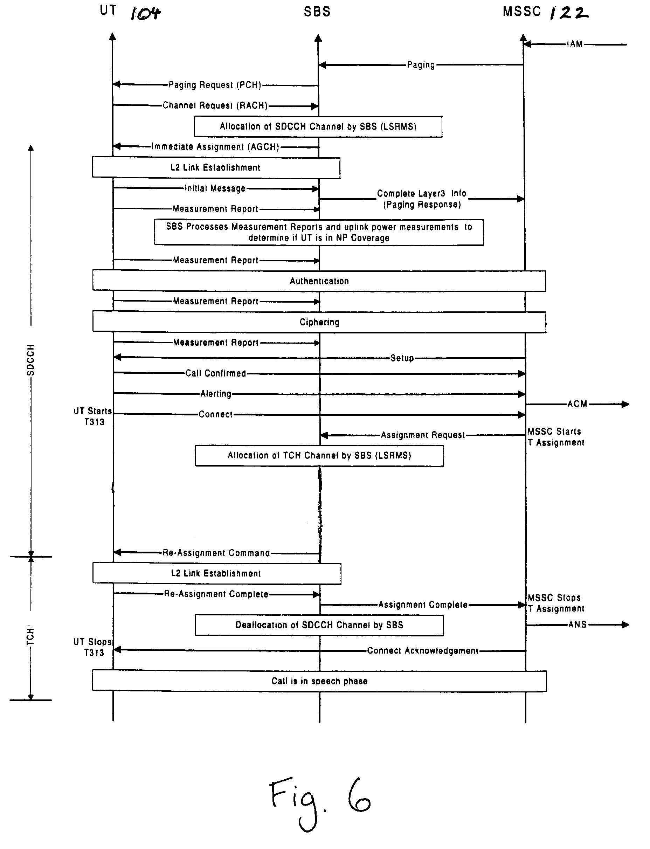

Referring to Figure 5, a SAN 101 comprises a satellite base station (SBS) including a dish antenna 120 mounted for tracking satellites, transmitting and receiving apparatus 21 which comprises amplifiers, multiplexers, demultiplexers, codecs and control processors, and a mobile satellite switching centre (MSSC) 122 including a controller 123, a visitor location register database (VLR) 124 and a voice mail box unit (VMB) 125. The MSSC 122 is coupled for communications signals to the backbone network 102, to a gateway 105 (Figure 3) and to the SBS. The controller 123 is coupled for data signals to the VLR 124 and the VMB 125 and may also send and receive data signals via the backbone network 102.

The controller 123 responds to addresses on incoming communications signals, from the SBS, the gateway 105 and the backbone network 102, by controlling the MSSC 122 to output the communications signals on the appropriate paths to their destinations, i.e. the SBS, the gateway 105 or the backbone network 102.

The VLR 124 maintains a record of each of the subscribers registered with the SAN 101. The VMB 125 provides storage space for voice mail messages for subscribers.

A database, called the home location register (HLR), contains records relating to each UT 104a. The record contains each UT's identity (International Mobile Subscriber Identity or IMS), the current status of the UT (whether it is "local" or "global" as will be described in greater detail below), the geographical position of the UT, the home MSSC with which the UT is registered (to enable billing and other data to be collected at a single point), the currently active SAN with which the UT is in communication via a satellite, an individual encyphering key and the address of an associated VMB location.

The HLR may be located in the NMC 107 (see Figure 3) or may be distributed among the SANs 101a, 101b, 101c (see Figure 3).

Referring to Figures 3 to 5, a UT 104a may be registered with one of two distinct statuses; "local" in which the UT 104a is permitted to communicate only through one local area or part of the satellite system network, and "global", which entitles the UT 104a to communicate through any part of the satellite mobile telephone system.

The UT 104a performs an automatic registration process, of the kind well known in the art of cellular terrestrial communications, on each occasion when the UT 104a is used for an outgoing call, when the UT 104a is switched on and periodically whilst the UT 104a is operating. As is conventional, the registration process takes the form of transmitting of a signal identifying the UT 104a (e.g. by transmitting its telephone number on a common hailing or signalling channel).

The transmitted signal is picked up by one or more of the satellites 103a, 103b. Under normal circumstances, the signal is picked up by a plurality of satellites 103a, 103b, and the received signal strength or time of arrival are transmitted, together with the identity of the UT 104a and the identity of the satellite 103a, 103b receiving the signal, to the HLR via the MSSCs 122a, 122b of the SANs 101a, 101b for which the satellites 103a, 103b are in communication.

The HLR calculates, on the basis of the received-signal arrival times, the terrestrial position of the UT 104a which is then stored in the UT's record. The identity of the SAN 101a, 101b, 101c most suitable for communicating with the UT 104a is also stored. This is typically found by comparing the stored position of the UT 103a with the positions of each of the SANs 101a, 101b, 101c and selecting the nearest. However, account may also or instead be taken of the strengths of the signals received via the satellites 103a, 103b, 103c, or of other factors such as network congestion which may result, in borderline cases, in the selection of a SAN 101a, 101b, 101c which is not geographically closest to the UT 104a. The identity of the allocated SAN 101a is then stored in the UTs record in the HLR. Once the HLR record has been updated, it is copied down to the VLR 125a of the selected SAN 101a.

If the UT 104 has voice mail enabled and is not available, callers can leave a voice mail message which is stored in the VMB125a of the UT's home MSSC 122a.

A first method of setting up of a mobile terminated call according to the present invention will now be described. The setting up of a call in this manner is also illustrated in Figure 6.

When a call is made to a UT 104, a Initial Address Message (IAM) is routed to the visited MSSC 122 with which the UT 104 is currently registered. The visited MSSC 122 sends a paging message to the SBS. The SBS initiates a Resource Request (RR) session with the UT 104 by sending a Paging Request to the UT 104 using a PAGCH channel. The PAGCH channel operates with a data rate of 100 bits s⁻¹ and has a nominal link margin of 18dB.

When the UT 104 receives the Paging Request, it responds by sending a Channel Request in a RACH channel. The SBS receives the Channel Request and allocates a suitable SDCCH/2 channel (i.e. a half rate SDCCH channel) to the UT 104. The SBS informs the UT 104 of the allocation by sending an Immediate Assignment message using a PAGCH channel. The SDCCH/2 has a data rate of 320 bits s⁻¹ and a nominal link margin of 18dB.

When the UT 104 receives the Immediate Assignment message, it initiates a layer 2 connection in the frequency and timeslot comprising the allocated SDCCH/2 channel. While establishing the layer 2 connection, the UT 104 sends an "initial message" to the SBS. At least part of the "initial message" is carried in the SABM (Set Asynchronous Balanced Mode) frame. After establishment of the layer 2 connection and receipt of the "initial message", the SBS processes the "initial message" and sends a Complete Layer 3 Information message, or "Paging Response", to the visited MSSC 122. From this point on, the controller of UT 104 repeatedly determines the quality of the SBS-to-UT path by obtaining bit error rates (BER) for the current BCCH from the codec. The UT 104 regularly sends these values to the SBS where they are processed.

The visited MSSC 122 responds to the Complete Layer 3 Information by initiating authentication and cyphering procedures. On successful completion of these procedures, the visited MSSC 122 sends a Setup message to the UT 104 and starts a first timer. The first timer sets a maximum time during which a response to the Setup message must be received by the visited MSSC 122, if the call is to be successfully completed.

When the UT 104 receives the Setup message, it processes it and responds with a Call Confirmed message to the visited MSSC 122. Receipt of the Call Confirmed message by the visited MSSC 122 causes the visited MSSC 122 to stop the first timer, assuming the it has not already timed out, and start a second timer. The second timer sets a period during which the visited MSSC 122 must be notified that the UT 104 is alerting the user of the incoming call, if the call is not to be cleared.

After sending the Call Confirmed message, the UT 104 produces an audio signal to alert the user of the incoming call and sends an Alerting message to the visited MSSC 122. When the visited MSSC 122 receives the Alerting message, it stops the second timer and sends an ACM (Address Complete Message) to the network of the calling party.

If the UT 104 determines that the quality of the path from the SBS is sufficient to support a call as determines from the BERs from the codec, it produces a first alert comprising the normal audio incoming call alert for the user. If, however, the quality of the path is not sufficient to support a call, it produces a second, distinctive audio alert for the user. This second alert may comprise a different tone pattern or a speech message such as "incoming call, move for better reception". The user will understand from the second alert that there is an incoming call but that he must undertake some action, e.g. extending the UT's antenna 115 or moving to a new position, before the call can be answered. While the second alert is sounding, the UT 104 will not respond to an off-hook command from the user, for instance pressing of an ANSWER button on the UT's keypad. The UT 104 switches between the two alerts, in dependence on the SBS-to-UT path quality, until the user answers the call or the alerting phase times out.

When the user successfully inputs an off-hook command into the UT 104, the UT 104 sends a Connect message to the visited MSSC 122. The visited MSSC 122 responds to the Connect message by sending an Assignment Request to the SBS. The SBS selects a free TCH channel and sends a Reassignment Command message to the UT 104, informing the UT 104 of the TCH channel allocated to the call. The TCH channel has a data rate of 4800 bits s⁻¹ and a nominal link margin of 8dB.

On receiving the Re-assignment Command message, the UT 104 establishes a layer 2 link in the newly allocated TCH channel and, when this has been done, it sends a Reassignment Complete message to the SBS. The SBS then sends an Assignment Complete message on to the visited MSSC 122. From this point on, signalling to and from the UT 104 is carried in a FACCH (Fast Associated Control Channel) and the SDCCH/2 channel is deallocated by the SBS.

The visited MSSC 122 responds to the Assignment Complete message from the SBS by sending an Answer message (ANS) to the calling party's network and by sending a Connect Acknowledge message to the UT 104.

The call is now fully connected and communication, for instance speech, can be carried out between the calling party and the UT's user.

The method described above requires a UT whose controller is programmed to cause off-hook commands to be ignored and generate the two alerts signals through the UT's loudspeaker.

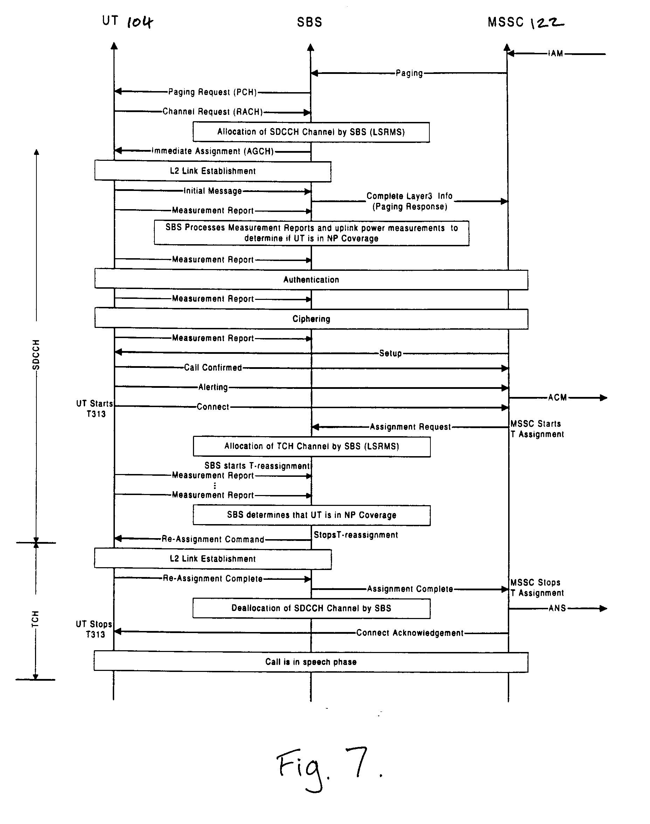

A second method of setting up of a mobile terminated call according to the present Invention, which employs a UT configured to operate according to a more conventional GSM-style call set up process, will now be described. The setting up of a call in this manner is also illustrated in Figure 7.

When a call is made to a UT 104, a Initial Address Message (IAM) is routed to the visited MSSC 122 with which the UT 104 is currently registered. The MSSC 122 sends a paging message to the SBS. The SBS initiates a Resource Request (RR) session with the UT 104 by sending a Paging Request to the UT 104 using a PAGCH channel. The PAGCH operates with a data rate of 100 bits s⁻¹ and has a link margin of 18dB.

When the UT 104 receives the Paging Request, it responds by sending a Channel Request in a RACH channel. The SBS receives the Channel Request and allocates a suitable SDCCH/2 channel to the UT 104. The nature of the allocated SDCCH/2 is dependent on the type of request and the link margin. The SBS informs the UT 104 of the allocation by sending an Immediate Assignment message using a PAGCH channel.

When the UT 104 receives the Immediate Assignment message, it initiates a layer 2 connection in the frequency and timeslot comprising the allocated SDCCH/2. While establishing the layer 2 connection, the UT 104 sends an "initial message" to the SBS. At least part of the "initial message" is carried in the SABM (Set Asynchronous Balanced Mode) frame. After establishment of the layer 2 connection and receipt of the "initial message", the SBS processes the "initial message" and sends a Complete Layer 3 Information message, or "Paging Response", to the visited MSSC 122. From this point on, the controller of UT 104 repeatedly determines the quality of the SBS-to-UT path by obtaining bit error rates (BER) for the current BCCH from the codec. The UT 104 regularly sends these values to the SBS where they are processed.

The visited MSSC 122 responds to the Complete Layer 3 Information by initiating authentication and cyphering procedures. On successful completion of these procedures, the visited MSSC 22 sends a Setup message to the UT 104 and starts a first timer. The first timer sets a maximum time during which a response to the Setup message must be received by the visited MSSC 122, if the call is to be successfully completed.

When the UT 104 receives the Setup message, it processes it and responds with a Call Confirmed message to the visited MSSC 122. Receipt of the Call Confirmed message by the visited MSSC 122 causes the visited MSSC 122 to stop the first timer, assuming the it has not already timed out, and start a second timer. The second timer sets a period during which the visited MSSC 122 must be notified that the UT 104 is alerting the user of the incoming call, if the call is not to be cleared.

After sending the Call Confirmed message, the UT 104 produces an audio signal to alert the user of the incoming call and sends an Alerting message to the visited MSSC 122. When the visited MSSC 122 receives the Alerting message, it stops the second timer and sends an ACM (Address Complete Message) to the network of the calling party.

When the user inputs an off-hook command into the UT 104, the UT 104 sends a Connect message to the visited MSSC 122 and starts a third timer T313. The third timer T313 sets the maximum period that the UT 104 will wait for completion of the call set up process. The visited MSSC 122 responds to the Connect message by sending an Assignment Request for a TCH channel to the SBS and starts a fourth timer T-Assignment.

On receiving the Assignment Request for a TCH channel from the visited MSSC 122, the SBS determines whether the quality of the path to the UT 104 is sufficient to support the call on the basis of the values reported by the UT 104. If the path quality is sufficient, the SBS selects a free TCH channel and immediately sends a Re-assignment Command message to the UT 104, informing the UT 104 of the TCH channel allocated to the call. On the other hand, if the path quality is not sufficient, the SBS buffers the Assignment Request and starts a fifth timer T-reassignment. The fifth timer T-reassignment is set to a period somewhat larger than may be required for a user to retrieve the UT 104 from, for example, an inside pocket and deploy its antenna 115.

While the fifth timer T-reassignment is running, the SBS continues to monitor the path quality values from the UT 104 and, if these values indicate that the path quality has become sufficient to support the call, it Stops the fifth timer T-reassignment and sends a Reassignment Command message to the UT 104. If the fifth timer T-reassignment expires before the values from the UT 104 indicate that the path quality is acceptable, the SBS sends a Reassignment Command message to the UT 104 anyway. This is done to account for the possibility that the path may support a call, even though the SBS may have determined otherwise. In this case, the sending of a Re-assignment Command message would allow the UT 104 to set up the call successfully, otherwise the call set up will fail which is what would have happened if the Reassignment Command message had not been sent.

On receiving the Re-assignment Command message, the UT 104 establishes a layer 2 link in the newly allocated TCH channel and, when this has been done, it sends a Re-assignment Complete message to the SBS. The SBS then sends an Assignment Complete message on to the visited MSSC 122. From this point on, signalling to and from the UT 104 is carried in a FACCH (Fast Associated Control Channel) and the SDCCH/2 channel is deallocated by the SBS.

The visited MSSC 122 responds to the Assignment Complete message from the SBS by sending an Answer message (ANS) to the calling party's network and by sending a Connect Acknowledge message to the UT 104.

The call is now fully connected and communication, for instance speech, can be carried out between the calling party and the UT's user.

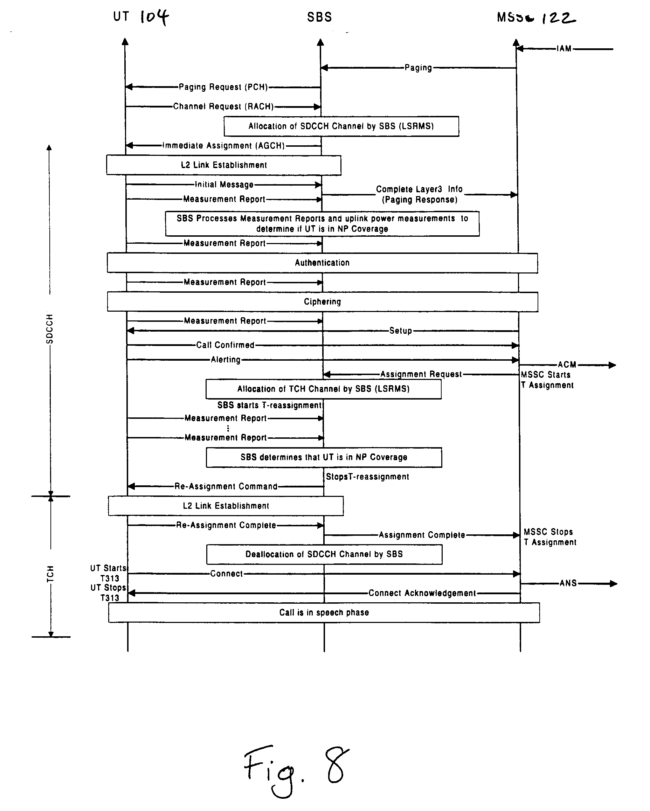

A third method of setting up of a mobile terminated call according to the present invention, which employs a UT configured to operate according to a substantially conventional GSM-style call setup process, will now be described. The setting up of a call in this manner is also illustrated in Figure 8.

When a call is made to a UT 104, a Initial Address Message (IAM) is routed to the visited MSSC 122 with which the UT 104 is currently registered. The MSSC 122 sends a paging message to the SBS. The SBS initiates a Resource Request (RR) session with the UT 104 by sending a Paging Request to the UT 104 using a PAGCH channel. The PAGCH channel operates with a data rate of 100 bits s⁻¹ and has a link margin of 18dB.

When the UT 104 receives the Paging Request, it responds by sending a Channel Request in a RACH channel. The SBS receives the Channel Request and allocates a suitable SDCCH/2 to the UT 104. The nature of the allocated SDCCH/2 is dependent on the type of request and the link margin. The SBS informs the UT 104 of the allocation by sending an Immediate Assignment message using a PAGCH channel.

When the UT 104 receives the Immediate Assignment message, it initiates a layer 2 connection in the frequency and timeslot comprising the allocated SDCCH/2. While establishing the layer 2 connection, the UT 104 sends an "initial message" to the SBS. At least part of the "initial message" is carried in the SABM (Set Asynchronous Balanced Mode) frame. After establishment of the layer 2 connection and receipt of the "initial message", the SBS processes the "initial message" and sends a Complete Layer 3 Information message, or "Paging Response", to the visited MSSC 122. From this point on, the controller of UT 104 repeatedly determines the quality of the SBS-to-UT 104 path by obtaining bit error rates (BER) for the current BCCH from the codec. The UT 104 regularly sends these values to the SBS where they are processed.

The visited MSSC 122 responds to the Complete Layer 3 Information by initiating authentication and cyphering procedures. On successful completion of these procedures, the visited MSSC 122 sends a Setup message to the UT 104 and starts a first timer. The first timer sets a maximum time during which a response to the Setup message must be received by the visited MSSC 122, if the call is to be successfully completed.

When the UT 104 receives the Setup message, it processes it and responds with a Call Confirmed message to the visited MSSC 122. Receipt of the Call Confirmed message by the visited MSSC 122 causes the visited MSSC 122 to stop the first timer, assuming the it has not already timed out, and Start a second timer. The second timer sets a period during which the visited MSSC 122 must be notified that the UT 104 is alerting the user of the incoming call, if the call is not to be cleared.

After sending the Call Confirmed message, the UT 104 produces an audio signal to alert the user of the incoming call and sends an Alerting message to the visited MSSC 122. When the visited MSSC 122 receives the Alerting message, it stops the second timer and sends an ACM (Address Complete Message) to the network of the calling party. The visited MSSC 22 also responds to the Alerting message by sending an Assignment Request for a TCH channel to the SBS and starts a third timer T-Assignment.

On receiving the Assignment Request for a TCH channel from the visited MSSC 122, the SBS determines whether the quality of the path to the UT 104 is sufficient to support the call on the basis of the values reported by the UT 104. If the path quality is sufficient, the SBS selects a free TCH channel and immediately sends a Re-assignment Command message to the UT 104, informing the UT 104 of the TCH channel allocated to the call. On the other hand, if the path quality is not sufficient, the SBS buffers the Assignment Request and starts a fourth timer T-reassignment. The fourth timer T-reassignment is set to a period somewhat larger than may be required for a user to retrieve the UT 104 from, for example, an inside pocket and deploy its antenna 115.

While the fourth timer T-reassignment is running, the SBS continues to monitor the path quality values from the UT 104 and, if these values indicate that the path quality has become sufficient to support the call, it stops the fourth timer T-reassignment and sends a Re-assignment Command message to the UT 104. If the fourth timer T-reassignment expires before the values from the UT 104 indicate that the path quality is acceptable, the SBS sends a Re-assignment Command message to the UT 104 anyway. This is done to account for the possibility that the path may support a call, even though the SBS may have determined otherwise. In this case, the sending of a Re-assignment Command message would allow the UT 104 to set up the call successfully, otherwise the call set up will fail which is what would have happened if the Re-assignment Command message had not been sent.

On receiving the Re-assignment Command message, the UT 104 establishes a layer 2 link in the newly allocated TCH channel and, when this has been done, it sends a Re-assignment Complete message to the SBS. The SBS then sends an Assignment Complete message on to the visited MSSC 122. From this point on, signalling to and from the UT 104 is carried in a FACCH (Fast Associated Control Channel) and the SDCCH/2 channel is deallocated by the SBS.

When the user inputs an off-hook command into the UT 104, the UT 104 waits for the Re-assignment Command message and then sends a Connect message to the visited MSSC 122 and Starts a fifth timer T313 after completion of the channel re-assignment and deallocation of the SDCCH/2 channel. The fifth timer T313 sets the maximum period that the UT 4 will wait for completion of the call set up process, i.e. subsequent receipt of a Connect Acknowledge message from the visited MSSC 122.

The visited MSSC 122 responds to the Assignment Complete message from the SBS by sending an Answer message (ANS) to the calling party's network and by sending a Connect Acknowledge message to the UT 104.

The call is now fully connected and communication, for instance speech, can be carried out between the calling party and the UT's user.

The T-Assignment timers referred to above should set so as to provide a reasonable time for a user to place the UT 104 in a condition such that a call can be supported. This may be in the range 1s to 120s.

The T313 timers referred to above should be set so as to provide sufficient time for re-assignment to the TCH.

The T-reassignment timers referred to in the second method above should be set so that the call set up is not terminated by another timer before it has expired.

The third method described above may be modified so that the UT 104 produces a first audio alert signal when it receives the setup signal and switches to producing a second audio alert signal when the Re-assignment Command message is received.

The differences between the three methods described above can be achieved by suitable programming of the UT's controller and the control processors of the SBS and the visited MSSC 122.

The 10dB link margin differences described above are achieved by transmitting the SDCCH/2 signals using 3dB more power than is used for TCH signals, using additional error coding and repetitions for the SDCCH/2 and using BSPK for the SDCCH/2 channels and QPSK for the TCH channels.

## Claims

1. A method of establishing communication in mobile radio system comprising transmitting a call setup signal to a mobile station (104) in a control channel (SDCCH/2) and transmitting a user generated signal to or from the mobile station in a traffic channel (TCH) **characterised in that** the call setup signal and/or the user-generated signal or the processing thereof by the mobile station is configured for providing a greater link margin for the call setup signal than that for the user-generated signal.

2. A method according to claim 1, comprising monitoring at the mobile station a path quality for said control channel or another control channel (BCCH) and enabling use of the traffic channel when the monitored path quality is adequate to support the traffic channel.

3. A method according to claim 1 or 2, wherein path, whose quality is monitored, is from a satellite to the mobile station.

4. A method according to claim 1, 2 or 3, comprising the steps of allocating said control channel to the mobile station, generating at the mobile station a first perceptible alerting signal until use of the traffic channel is enabled and thereafter generating at the mobile station a second perceptible alerting signal, the first and second perceptible alerting signals differing from each other.

5. A method of operating a satellite mobile telephone system according to any preceding claim, comprising the steps of:
paging the mobile station to notify it of an incoming call;
operating the mobile station to request a control channel in response to the paging;
notifying the mobile station of a control channel (SDCCH/2) allocated to it;
operating the mobile station to monitor the path quality for the control channel;
if the monitored quality of said or another control channel (BCCH) is sufficient to support a call, operating the mobile station to detect an off-hook command; and
on detection of an off-hook command, operating the mobile station to send a call answered message to a switching centre and allocating the traffic channel to the call.

6. A method of operating a satellite mobile telephone system according to any one of claims 1 to 4, comprising the steps of:
paging the mobile station to notify it of an incoming call;
operating the mobile station to request the control channel in response to the paging;
notifying the mobile station of the control channel (SDCCH/2) allocated to it;
operating the mobile station to monitor path quality for said or another control channel (BCCH) and repeatedly report the path quality to a network control node (101); and
when the reported path quality is sufficient to support a traffic channel, allocating a traffic channel to the call at the network control node.

7. A method according to any preceding claim, wherein said link margins differ by substantially 10dB.

8. A method according to claim 7, wherein the link margin for the control channel is substantially 18dB.

9. A mobile radio system configured to operate according to any precling claim.

10. A satellite mobile telephone system configured to operate according to any preceding claim.

11. A mobile radio system comprising a mobile station (104) and a base station (101) configured to send a call setup signal in a control channel (SDCCH/2) and exchange user-generated signals in a traffic channel (TCH), **characterised in that** the base station and/or the mobile station is configured such that the link margin for the control channel is greater than that for the traffic channel.

12. A satellite mobile telephone system according to claim 11.

13. A mobile radio apparatus comprising transceiver means (9, 13, 17), alert signal generating means (14, 17, 18) and a controller (14), **characterised in that** the controller is configured to respond to a call setup signal by monitoring the path quality for a channel from the same transmitter as the call setup signal until the monitored path quality is sufficient to support user generated signal transmission and then becoming enabled for transmission of user generated signals from the input means.

14. An apparatus according to claim 13, wherein the controller is configured to further respond to a call setup signal to operate the alert signal generating means to notify a user that another party wishes to communicate but that communication is not currently possible during the time elapsing until the monitored path quality is sufficient to support user-generated signal transmission.

15. A mobile telephone according to claim 13 or 14, wherein the controller is configured to respond to the monitored path quality becoming suitable to support user-generated signal transmission to cause the alert signal generating means to notify a user that the user-generated signal transmission is enabled.

16. A radio base station apparatus comprising control means (2; 123) for generating a call setup signal, input means (5) for receiving a user-generated signal and transmitter means (1; 121) for transmitting the call setup signal and a subsequently received user-generated signals, **characterised in that** the transmitter means is configured to transmit the call setup signal and the user-generated signals in a manner to provide for the call setup signal a greater link margin than for the user-generated signal.

17. An apparatus according to claim 16, including a satellite earth station (101).

18. A radio spectrum comprising a carrier wave modulated with setup data for a mobile station and subsequently a carrier wave modulated with speech for said mobile station, the signals comprised in the spectrum being radiated from the same location, **characterised in that** the setup data is at a first information rate and the speech is at a second higher information rate.

19. A radio spectrum according to claim 18, wherein BPSK is used for the setup data and QPSK is used for the speech.

20. A radio spectrum according to claim 18 or 19, configured according to a TDMA channelisation scheme.
